# FASCICULE DE BREVET EUROPEEN

(11) **EP 1 269 163 B1**
(45) Date de publication et mention de la délivrance du brevet: **03.09.2008**
(21) Numéro de dépôt: 02715319.6
(22) Date de dépôt: 08.01.2002
(51) Int. Cl.: G01N 21/952

(54) **APPAREIL POUR L'INSPECTION D'UNE SURFACE**
VORRICHTUNG ZUR UNTERSUCHUNG EINER OBERFLÄCHE
APPARATUS FOR INSPECTING A SURFACE

(30) Priorité: 16.01.2001 BE 200100034
(43) Date de publication de la demande: 02.01.2003
(73) Titulaire: Centre de Recherches Metallurgiques - Centrum voor de Research in de Metallurgie, 1200 Bruxelles (BE)
(72) Inventeur: FRANSSEN, Roger, B-4850 Montzen-Plombières (BE); UIJTDEBROEKS, Hugo, B-3500 Hasselt (BE)
(74) Mandataire: pronovem
(86) Numéro de dépôt international: PCT/BE2002/000003
(87) Numéro de publication internationale: WO 2002/055999

(56) Documents cités:
- EP-A- 0 547 227
- EP-A- 0 697 591
- PATENT ABSTRACTS OF JAPAN vol. 1996, no. 07, 31 juillet 1996 (1996-07-31) & JP 08 068759 A (KOBE STEEL LTD), 12 mars 1996 (1996-03-12)
- PATENT ABSTRACTS OF JAPAN vol. 009, no. 029 (M-356), 7 février 1985 (1985-02-07) & JP 59 174204 A (NIPPON KOKAN KK), 2 octobre 1984 (1984-10-02)

## Description

### Domaine technique

La présente invention concerne un appareil pour l'inspection d'une surface, en particulier mais pas exclusivement la surface d'un cylindre de travail d'un laminoir à bandes en acier.

### Etat de la technique

Il existe dans la technique de nombreuses applications où l'état de la surface d'un outil de fabrication conditionne au moins en partie la qualité du produit fabriqué. Un cas particulier extrêmement important est celui de la fabrication des bandes en acier, dont la qualité superficielle dépend, dans une large mesure, de l'état de surface des cylindres de travail du laminoir.

Pour fixer les idées, l'invention sera décrite ici en faisant référence à cette application particulière. Il va de soi cependant que l'invention proprement dite est indépendante de cette application et peut au contraire être mise en oeuvre avantageusement dans toute situation présentant des conditions de travail comparables.

L'état de surface des cylindres de laminoir, tels que les cylindres de travail des cages finisseuses d'un train de laminoir à bandes, influence fortement la qualité de surface des bandes destinées par exemple à la fabrication des tôles de carrosserie automobile. Au cours du laminage, la surface des cylindres se dégrade sous l'effet des contraintes thermiques et mécaniques auxquelles elle est soumise. Cette dégradation peut être telle que des arrachements de pellicules d'oxyde se produisent, ces pellicules pouvant alors se retrouver incrustées à la surface de la bande.

Il importe en conséquence d'inspecter régulièrement la surface des cylindres, afin de déceler aussi tôt que possible les défauts susceptibles de compromettre la qualité des produits laminés.

Initialement, l'inspection des cylindres consistait en un simple examen visuel effectué par un opérateur lors du remplacement du cylindre. Dans certains cas, des inspections intermédiaires étaient requises, nécessitant alors l'arrêt du laminoir et quelquefois même le démontage des cylindres. Ces arrêts intermédiaires demandent beaucoup de temps, entraînant ainsi une perte de productivité. De plus, le caractère subjectif d'un telle inspection visuelle peut affecter sa qualité. Elle ne répond dès lors plus aux exigences actuelles de fiabilité, de reproductibilité et de rapidité.

Il existe certes des appareils qui permettent, en principe, d'effectuer cette inspection de façon fiable et reproductible. Leur utilisation se heurte cependant à de grandes difficultés pratiques, en raison des conditions qui règnent à proximité des cylindres de laminoir. Outre une température élevée, l'environnement y est particulièrement défavorable en raison des projections d'eau de refroidissement et d'huile de lubrification qui peuvent exister à proximité du dispositif d'inspection et qui rendent impossible toute inspection directe.

On a aussi déjà proposé des dispositifs, dits de couplage optique, destinés à améliorer cette inspection en visant à travers une colonne d'eau créée entre l'appareil d'inspection et la surface à inspecter.

D'une manière générale, les appareils d'inspection équipés de ces dispositifs connus comprennent d'une part un émetteur qui envoie un faisceau lumineux vers la surface à inspecter et d'autre part un récepteur qui capte le faisceau lumineux réfléchi par cette surface. L'objet de l'invention se range également dans cette catégorie. A cet égard, il faut bien comprendre que le faisceau lumineux dont il sera question ici comprend aussi bien le faisceau incident émis par l'émetteur que le faisceau réfléchi capté par le récepteur. Le dispositif de couplage optique doit dès lors livrer passage à l'un et à l'autre de ces deux faisceaux incident et réfléchi.

Un inconvénient important des dispositifs de couplage optique connus est qu'ils sont généralement assez compliqués, ce qui ne facilite ni leur fabrication ni leur entretien, ni en définitive leur utilisation.

Il existe dès lors un besoin d'un dispositif de couplage optique, simple et peu coûteux, permettant de réaliser dans de bonnes conditions l'inspection d'une surface telle que la surface d'un cylindre de laminoir.

Le document EP 0 547 227 A décrit un appareil optique de contrôle de surface pour obtenir une image stationnaire de à surface d'un cylindre de laminoir, muni d'un caisson équipé d'une fenêtre de vision et contenant un appareil d'éclairage stroboscopique et une caméra de télévision, de même qu'un mécanisme d'évacuation des gouttes d'eau à partir de la périphérie de l'extérieur de la fenêtre, permettant ainsi d'éliminer de la périphérie les gouttes d'eau diffusées et générées à partir de l'eau de refroidissement du cylindre, en vue de déterminer avec précision l'état de surface du cylindre de laminoir, alors que celui-ci est en rotation. Le mécanisme d'évacuation des gouttes d'eau comprend une colonne d'eau formant une buse terminée par un bec, attachée à la face avant de l'appareil munie de ladite fenêtre équipant le caisson et capable de former la colonne d'eau entre la fenêtre et la surface du cylindre tournant lorsqu'une pression d'eau est fournie dans la colonne d'eau formant la buse. Un élément élastique est disposé entre le corps de buse et ladite face avant pour contrecarrer la force de répulsion de l'eau sous pression éjectée par la buse contre la surface du cylindre tournant, de manière telle, qu'à l'équilibre des forces, un intervalle de largeur prédéterminée se forme entre la surface du cylindre et le corps de la buse.

Le document JP 08 068 759 A décrit un appareil optique de contrôle de surface d'un cylindre tournant muni d'une colonne d'eau au moyen d'une buse attachée à un caisson comprenant une fenêtre de vision et une caméra CCD associée à une source d'éclairage au xénon, pour prendre une image stationnaire de la surface du cylindre en rotation. La distance entre l'extrémité de la buse et la surface du cylindre est mesurée par un capteur de distance de type à courants de Foucault. La buse est terminée par un manchon fixe en caoutchouc qui permet un contact éventuel avec le cylindre sans l'endommager.

### Présentation de l'invention

La présente invention cherche à répondre à ce besoin. Telle qu'elle est caractérisée dans les revendications, l'invention porte sur un appareil pour l'inspection d'une surface avec un dispositif simple de couplage optique qui garantit une vision parfaite de la surface à inspecter, en évitant les perturbations du champ de vision par des substances telles que des projections d'eau ou d'huile.

Conformément à l'invention, un appareil pour l'inspection d'une surface, en particulier de la surface d'un cylindre de laminoir, qui comprend des caractéristiques correspondantes à la revendication 1.

L'ouverture de passage du faisceau lumineux, prévue dans le distributeur de fluide, est avantageusement plus petite que la section de la tête de la pièce tubulaire mobile. Le distributeur de fluide forme ainsi une butée limitant la course de la pièce tubulaire mobile en direction de ladite face avant du boîtier.

Selon une caractéristique particulière, l'embout cylindrique présente, à hauteur dudit épaulement intérieur, des canaux mettant l'espace intérieur de l'embout cylindrique en communication avec l'extérieur.

Selon une autre caractéristique avantageuse, ladite pièce tubulaire mobile présente une section intérieure plus petite dans sa région d'extrémité du côté de la tête que dans sa portion allongée. Cette diminution de la section intérieure conduit à une augmentation de la surface de la face d'extrémité, du côté de la tête, et par conséquent aussi à un accroissement de la force exercée sur cette surface par la pression de l'eau en direction de la surface à inspecter.

Au moins dans sa région d'extrémité pouvant venir en contact avec la surface à inspecter, la pièce tubulaire mobile est avantageusement réalisée en une matière dont la dureté est inférieure à celle de la surface à inspecter. Dès la mise en service, l'extrémité de la pièce tubulaire mobile peut ainsi s'user progressivement au contact du cylindre pour s'adapter à la courbure du cylindre. Lors d'un changement de cylindre, il peut cependant arriver que cette pièce tubulaire tourne autour de son axe, ce qui entraîne un défaut de couplage qui ne disparaît ensuite que progressivement.

Selon encore une autre caractéristique avantageuse, ladite pièce tubulaire mobile peut dès lors être munie de moyens empêchant sa rotation autour de son axe longitudinal. En particulier, ces moyens peuvent comprendre un ergot prévu sur la surface intérieure de la portion de sortie de l'embout cylindrique, et une rainure longitudinale ménagée dans la surface latérale extérieure de la portion allongée de ladite pièce tubulaire mobile, et dans laquelle est engagé ledit ergot.

Dans le dispositif de l'invention, ladite pièce tubulaire présente des faces d'extrémité en forme de couronnes de forme correspondante, dont les grandeurs respectives sont déterminées par les sections intérieure et extérieure respectives des deux extrémités de la pièce. Le fluide de couplage optique peut dès lors agir sur ces deux surfaces et ainsi faire coulisser la pièce tubulaire à l'intérieur de l'embout cylindrique afin de la positionner automatiquement de façon optimale par rapport à la surface à inspecter.

Un avantage essentiel du dispositif de l'invention est que la pièce tubulaire est positionnée, éventuellement même en contact avec la surface à inspecter, uniquement par l'action du fluide de couplage optique.

Par l'expression "section intérieure constante", il faut comprendre que la section intérieure de l'embout cylindrique conserve la même forme et les mêmes dimensions sur toute la longueur concernée. Dans le cas d'une section circulaire, cela signifie que le diamètre intérieur de l'embout cylindrique reste constant sur cette longueur. De même, la section extérieure, respectivement la section intérieure d'un composant vise la section définie par le contour extérieur, respectivement le contour extérieur de ce composant.

Des détails et des avantages supplémentaires seront encore révélés par la description détaillée d'exemples de réalisation, illustrés par les dessins annexés sans échelle particulière.

Dans ces dessins, on n'a représenté que les éléments nécessaires pour une bonne compréhension de l'invention. De plus, des éléments identiques ou analogues sont désignés par les mêmes repères numériques dans les diverses figures. Pour la clarté de la description qui suit, donnée à titre de simple exemple de réalisation, l'axe optique du dispositif de couplage coïncide avec l'axe du faisceau lumineux et les composants du dispositif de couplage présentent la symétrie de révolution autour de cet axe.

### Brève description des dessins

Dans ces dessins, la
- Fig. 1: montre, en coupe longitudinale, un dispositif de couplage optique conforme à l'invention, monté sur un boîtier d'un appareil d'inspection de la surface d'un cylindre de laminoir; et la
- Fig. 2: représente un détail agrandi du dispositif de la figure 1, pourvu de moyens empêchant la rotation de la pièce tubulaire mobile.

### Modes de réalisation de l'invention

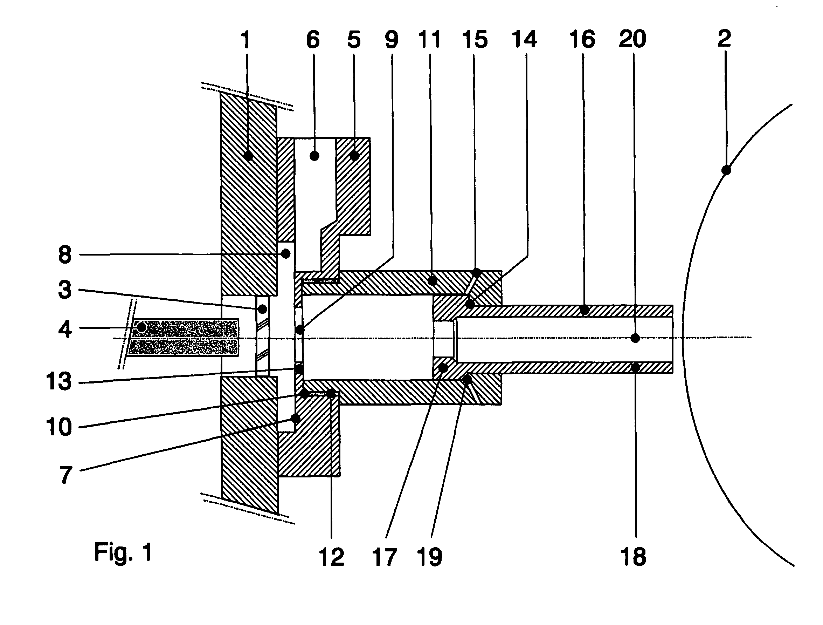

Dans la **figure 1**, on a montré un dispositif de couplage optique monté sur un boîtier 1, représenté à titre indicatif par une portion de sa paroi avant, tournée vers la surface d'un cylindre de laminoir 2 à inspecter.

Sans entrer ici dans le détail, on précise que cette paroi avant 1 comporte un hublot étanche transparent 3, à travers lequel peut passer un faisceau lumineux, symbolisé par son axe, provenant par exemple d'un ensemble 4 contenant une source de lumière formant le faisceau lumineux émis vers le cylindre de laminoir 2 à inspecter et un dispositif optique de réception captant le faisceau lumineux réfléchi par la surface du cylindre 2.

A cette paroi avant 1 est fixée une pièce 5, dite ici distributeur d'eau, qui présente un orifice latéral d'entrée d'eau 6. A l'arrière de ladite pièce 5 est ménagé un évidement 7, qui délimite avec la paroi 1 un espace 8 s'étendant en face du hublot 3. Cet espace 8 communique avec l'orifice d'entrée 6. En face du hublot 3, la pièce 5 est encore percée d'une ouverture 9 communiquant avec ledit espace 8 et prolongée suivant l'axe du faisceau lumineux par une portée filetée intérieurement de plus grand diamètre 10.

Un embout cylindrique 11 présente, à une première extrémité, une portée filetée extérieurement 12, qui est vissée dans la pièce 5 jusqu'à buter sur un épaulement 13 formé par la pièce 5. A son autre extrémité, l'embout cylindrique 11 présente une diminution de section avec un épaulement annulaire intérieur 14. Dans l'angle dudit épaulement 14 débouchent des canaux 15 menant vers l'extérieur de l'embout cylindrique.

A l'intérieur de l'embout cylindrique 11 est disposée une buse mobile 16, présentant une portion d'extrémité ou tête 17 logée à l'intérieur de l'embout cylindrique 11, et une portion allongée 18 sortant de celui-ci par son extrémité rétrécie. Le diamètre extérieur de la portion allongée 18 est plus petit que celui de la tête 17; la buse mobile 16 présente ainsi un épaulement annulaire extérieur 19 coopérant avec l'épaulement annulaire intérieur 14 de l'embout cylindrique. En outre, l'ouverture 9, pratiquée dans la pièce 5, présente un diamètre plus petit que le diamètre extérieur de la tête 17, prolongeant ainsi radialement l'épaulement 13 mentionné plus haut. L'épaulement 13 sert ainsi de butée également pour la pièce tubulaire mobile 16; celle-ci est de cette façon empêchée de franchir l'ouverture 9 et de pénétrer dans l'espace 8, où elle pourrait perturber le bon fonctionnement du dispositif, en particulier la circulation du fluide de couplage.

Il va de soi que la buse 16 doit être insérée dans l'embout cylindrique 11 avant de visser celui-ci sur la pièce 5. On comprendra en outre que l'ouverture 9, l'embout cylindrique 11 et la buse mobile 16 sont alignés coaxialement à l'axe 20 du faisceau lumineux.

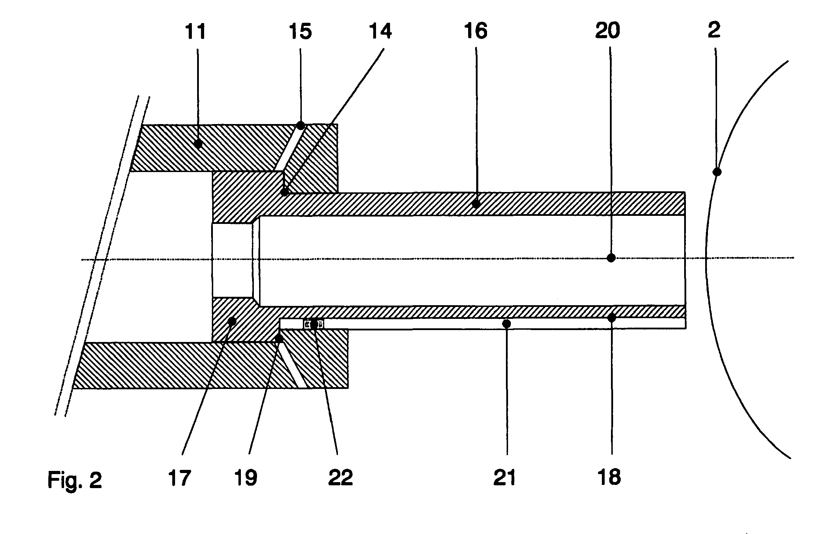

La **figure 2** représente un détail agrandi du dispositif de la figure 1, selon lequel la pièce tubulaire mobile 16 est pourvue d'une rainure longitudinale extérieure 21, dans laquelle s'engage un ergot de blocage 22 prévu dans la région de sortie de l'embout cylindrique 11. La pièce tubulaire mobile 16 peut ainsi coulisser longitudinalement dans l'embout cylindrique, tout en étant empêchée de tourner autour de son axe longitudinal.

### Ce dispositif de couplage optique fonctionne de la façon suivante:

L'eau introduite par l'orifice d'entrée 6 parvient dans l'espace 8 où elle est distribuée sur toute la surface du hublot 3. Par l'ouverture 9, elle s'écoule ensuite dans l'embout cylindrique 11 puis dans la buse mobile 16, pour s'échapper enfin par l'espace compris entre la buse mobile 16 et la surface du cylindre 2.

Sous l'effet de la pression de l'eau passant de l'embout cylindrique 11 dans la buse mobile 16, celle-ci est poussée en direction de la surface du cylindre 2. Il se crée ainsi une colonne d'eau, protégée par la buse mobile, dont la longueur s'adapte automatiquement à la distance séparant le hublot 3 et la surface du cylindre 2. Cette position implique cependant que la buse mobile vienne en contact avec la surface du cylindre. En réalité, l'eau de couplage s'échappant entre la surface du cylindre 2 et la buse mobile 16 exerce sur la face d'extrémité de celle-ci une contre-pression qui repousse la buse mobile 16 en direction du hublot 3. La buse se stabilise lorsque les deux pressions s'équilibrent. L'écart ainsi obtenu entre la buse mobile et la surface du cylindre, et donc le positionnement de la buse mobile, peut être réglé en agissant simplement sur le débit d'eau de couplage.

En fonctionnement normal, la buse mobile 16 ne touche en principe pas la surface du cylindre 2, ce qui réduit fortement les risques de dégradation tant de la buse mobile 16 que de la surface du cylindre 2. Néanmoins, à l'occasion d'un changement de cylindre, la buse mobile 16 peut tourner autour de son axe 20, avec les inconvénients indiqués plus haut. La rainure longitudinale 21 coopérant avec l'ergot 22 empêche cette rotation.

Le dispositif de couplage optique de l'invention n'est pas limité à la description qui précède ou à la représentation qui est en est faite dans les dessins annexés. En particulier, l'invention englobe également des variantes dans lesquelles les différents composants du dispositif, à savoir l'ouverture 9, l'embout cylindrique 11 et la pièce tubulaire mobile 16, ne sont pas disposés coaxialement par rapport au faisceau lumineux 20. En outre, la section droite de ces composants n'est pas nécessairement de forme circulaire, respectivement annulaire ronde; elle peut au contraire présenter toute autre forme, notamment polygonale ou elliptique, par exemple pour définir la position de la pièce tubulaire mobile et empêcher sa rotation.

## Revendications

1. Appareil pour l'inspection d'une surface, en particulier de la surface d'un cylindre de laminoir, qui comprend un boîtier dans lequel sont disposés des moyens d'émission et de réception d'un faisceau lumineux, dans lequel la paroi avant (1) dudit boîtier, c'est-à-dire la paroi tournée vers la surface à inspecter (2), présente une fenêtre transparente (3) pour le passage dudit faisceau lumineux entre lesdits moyens d'émission et de réception et la surface à inspecter, et dans lequel un dispositif de couplage optique est disposé sur la surface extérieure de ladite paroi avant du boîtier, d'une façon telle que son axe optique soit au moins sensiblement parallèle à l'axe (20) dudit faisceau lumineux, ledit dispositif de couplage optique comportant une pièce (5), dite distributeur de fluide, fixée à ladite paroi avant du boîtier et percée d'une ouverture (9) de passage dudit faisceau lumineux, un embout cylindrique creux (11) disposé dans le prolongement de ladite ouverture (9) de passage du faisceau lumineux et une pièce tubulaire mobile (16), disposée dans le prolongement dudit embout cylindrique et montée coulissante par rapport à celui-ci, le distributeur de fluide (5) étant pourvu d'un orifice d'entrée (6) du fluide de couplage et de passages (8) reliant l'orifice d'entrée (6) à ladite ouverture (9), l'embout cylindrique creux (11) étant assemblé de façon étanche au distributeur de fluide (5), **caractérisé en ce que**
- l'embout cylindrique creux (11) présente une section intérieure constante sur la plus grande partie de sa longueur et une portion de sortie dont la section est plus petite que ladite section intérieure de manière à former un épaulement intérieur (14) à proximité de la sortie dudit embout cylindrique ;
- la pièce tubulaire mobile (16) ouverte aux deux extrémités présente une tête (17) dont la section est légèrement plus petite que la section intérieure dudit embout cylindrique, et une portion allongée (18) dont la section est légèrement plus petite que la section de ladite portion de sortie de l'embout cylindrique, la tête (17) et la portion allongée (18) de la pièce tubulaire étant reliées par un épaulement extérieur (19) ;
- ladite pièce tubulaire (16) est montée coulissante à l'intérieur dudit embout cylindrique de manière telle que ladite portion allongée (18) sorte par ladite portion de sortie sous l'effet de la pression de l'eau passant de l'embaut dans la piece tubulaire mobile (16) et que l'épaulement extérieur (19) de ladite pièce tubulaire coopère avec ledit épaulement intérieur (14) dudit embout cylindrique.

2. Appareil suivant la revendication 1, **caractérisé en ce que** l'ouverture (9) est plus petite que la section de la tête (17) de la pièce tubulaire mobile (16).

3. Appareil suivant l'une ou l'autre des revendications 1 et 2, **caractérisé en ce que** l'embout cylindrique (11) présente, à hauteur dudit épaulement intérieur (14), des canaux (15) mettant l'espace intérieur de l'embout cylindrique en communication avec l'extérieur.

4. Appareil suivant l'une quelconque des revendications précédentes, **caractérisé en ce que** ladite pièce tubulaire mobile (16) présente une section intérieure plus petite dans sa région d'extrémité du côté de la tête (17) que dans sa portion allongée (18).

5. Appareil suivant l'une quelconque des revendications précédentes, **caractérisé en ce que** ladite pièce tubulaire mobile (16) est munie de moyens empêchant sa rotation autour de son axe longitudinal.

6. Appareil suivant la revendication 5, **caractérisé en ce que** lesdits moyens comprennent une rainure longitudinale (21) ménagée dans la surface latérale extérieure de la portion allongée (18) de la pièce tubulaire mobile (16), et un ergot (22) prévu dans la portion de sortie de l'embout cylindrique (11) et s'engageant dans ladite rainure longitudinale (21).

7. Appareil suivant l'une quelconque des revendications précédentes, **caractérisé en ce que** la pièce tubulaire mobile (16) est, au moins dans sa région d'extrémité, réalisée en une matière dont la dureté est inférieure à celle de la surface à inspecter (2).

8. Appareil suivant l'une quelconque des revendications précédentes, **caractérisé en ce que** l'axe optique d'au moins un des composants du dispositif de couplage optique, à savoir l'ouverture de passage (9), l'embout cylindrique (11) et la pièce tubulaire mobile (16), coïncide avec l'axe (20) dudit faisceau lumineux.

9. Appareil suivant la revendication 8, **caractérisé en ce qu'**au moins un desdits composants (9; 11; 16) du dispositif de couplage optique présente la symétrie de révolution autour dudit axe (20) du faisceau lumineux.

## Claims

1. Device for inspecting a surface, in particular the surface of a cylinder of a rolling mill, which comprises a box in which is located a means for emitting and receiving a light beam, in which the front wall (1) of said box, i.e. the wall facing the surface to be inspected (2), has a transparent window (3) to allow the passage of said light beam between said emission and reception means and the surface to be inspected, and in which an optical coupling device is positioned on the outer surface of said front wall of the box, in such a way that its optical axis is at least more or less parallel to the axis (20) of said light beam, said optical coupling device comprising a part (5), called fluid distributor, attached to said front wall of the box and pierced with an opening (9) for the passage of said light beam, a hollow cylindrical nozzle (11) positioned as an extension of said opening (9) for allowing the passage of the light beam and a movable tubular part (16) positioned as an extension of said cylindrical nozzle and sliding relative to it, the fluid distributor (5) being equipped with an intake opening (6) for the coupling fluid and with spaces (8) connecting the intake aperture (6) with said opening (9), the hollow cylindrical nozzle (11) being sealingly fitted to the fluid distributor (5),
**characterised in that**
- the hollow cylindrical nozzle (11) has an inner cross-section that is constant along most of its length and an outlet section whose cross-section is smaller than said inner cross-section so as to form an inner shoulder (14) in the vicinity of the outlet from said cylindrical nozzle;
- the movable tubular part (16), which is open at both ends, comprises a head (17) whose cross-section is slightly smaller than the inner cross-section of said cylindrical nozzle and an elongated section (18) whose cross-section is slightly smaller than the cross-section of said outlet section of the cylindrical nozzle, the head (17) and the elongated section (18) of the tubular part being connected by an outer shoulder (19) ;
- said tubular part (16) is sliding inside said cylindrical nozzle in such a way that said elongated section (18) comes out through said outlet section as a result of the pressure of the water passing from the nozzle to the movable tubular part (16) and so that the outer shoulder (19) of said tubular part co-operates with said inner shoulder (14) of said cylindrical nozzle.

2. Device according to Claim 1, **characterised in that** the opening (9) is smaller than the cross-section of the head (17) of the movable tubular part (16).

3. Device according to any one of Claims 1 and 2, **characterised in that,** at the level of said inner shoulder (14), the cylindrical nozzle (11) comprises channels (15) connecting the inner space of the cylindrical nozzle with the outside.

4. Device according to any one of the preceding claims, **characterised in that** said movable tubular part (16) has a smaller inner cross-section in its end area at the side of the head (17) than in its elongated section (18).

5. Device according to any one of the preceding claims, **characterised in that** said movable tubular part (16) is equipped with a means for preventing its rotation around its longitudinal axis.

6. Device according to Claim 5, **characterised in that** said means comprises a longitudinal groove (21) provided in the outer side surface of the elongated section (18) of the movable tubular part (16) and a pin (22) positioned in the outlet section of the cylindrical nozzle (11) and fitting into said longitudinal groove (21).

7. Device according to any one of the preceding claims, **characterised in that** the movable tubular part (16) is, at least in its end area, made of a material whose hardness is lower than that of the surface to be inspected (2).

8. Device according to any one of the preceding claims, **characterised in that** the optical axis of at least one of the components of the optical coupling device, namely the passage opening (9), the cylindrical nozzle (11) and the movable tubular part (16), coincides with the axis (20) of said light beam.

9. Device according to Claim 8, **characterised in that** at least one of said components (9,11,16) of the optical coupling device has rotational symmetry around said axis (20) of the light beam.

## Patentansprüche

1. Gerät zur Überprüfung einer Oberfläche, insbesondere der Oberfläche einer Walze eines Walzwerks, das ein Gehäuse umfasst, indem Vorrichtungen zur Aussendung und zum Empfang eines Lichtstrahls enthalten sind. Die Vorderseite (1) des besagten Gehäuses, d.h. die der zu überprüfenden Oberfläche zugewandte Seite (2), beinhaltet ein transparentes Fenster (3) für den Durchgang des besagten Lichtstrahls zwischen den besagten Vorrichtungen zum Aussenden und Empfang des besagten Lichtstrahls und der zu überprüfenden Oberfläche. Ferner ist auf der äußeren Oberfläche der besagten Vorderseite des Gehäuses, ein Optikkoppler in einer solchen Weise angebracht, dass ihre optische Achse im Wesentlichen parallel zur Achse (20) des besagten Lichtstrahls angeordnet ist. Der besagte Optikkoppler beinhaltet ein Bauteil (5), Flüssigkeitsverteiler genannt, das an der besagten vorderen Wand des Gehäuses befestigt und mit einer Öffnung (9) für den Durchgang des besagten Lichtstrahls versehen ist und darüber hinaus ein zylindrisches, hohles Anschlussstück (11), das in der Verlängerung der besagten Öffnung (9) des Durchgangs für den Lichtstrahl angeordnet ist. Ferner beinhaltet der Optikkoppler ein röhrenförmiges, bewegliches Bauteil (16), das in der Verlängerung des besagten zylindrischen Mundstücks und gleitend im Verhältnis zu diesem angeordnet ist. Der Flüssigkeitsverteiler (5) ist mit einer Einlassöffnung (6) für die Kopplerflüssigkeit sowie mit Durchgängen (8) ausgestattet, die die Eingangsöffnung (6) mit der besagten Öffnung (9) verbinden. Das zylindrische, hohle Anschlussstück (11) ist dicht am Flüssigkeitsverteiler (5) montiert. Das Gerät ist **dadurch gekennzeichnet, dass**
- Das zylindrische, hohle Anschlussstück (11) einen gleichbleibenden Innenquerschnitt auf dem größten Teil seiner Länge und ferner einen Endbereich hat, deren Querschnitt kleiner als der besagte Innenquerschnitt ist, um einen Innenvorsprung (14) in der Nähe des Endes des besagten zylindrischen Mundstücks zu bilden.
- Das röhrenförmige, bewegliche, zu beiden Seiten geöffnete Bauteil (16) verfügt über einen Kopf (17), dessen Querschnitt geringfügig kleiner ist als der Innenquerschnitt des besagten zylindrischen Mundstücks. Es verfügt ferner über einen verlängerten Teil (18), dessen Querschnitt geringfügig kleiner ist als der Querschnitt des besagten Teils des Endes am zylindrischen Mundstück. Der Kopf (17) und der verlängerte Teil (18) des röhrenförmigen Bauteils sind durch einen äußeren Vorsprung (19) verbunden.
- Das besagte röhrenförmige Bauteil (16) ist gleitend am Inneren des besagten zylindrischen Mundstücks in einer solchen Weise befestigt, dass der besagte verlängerte Teil (18) aus dem besagten Endbereich durch die Auswirkungen des durch die Mündung des röhrenförmigen beweglichen Bauteils (16) strömenden Wasserdrucks hervorragt und dass der äußere Vorsprung (19) des besagten röhrenförmigen Bauteils mit dem besagten äußeren Vorsprung (14) der besagten zylindrischen Mündung zusammenwirkt.

2. Gerät gemäß dem Anspruch 1, **dadurch gekennzeichnet, dass** die Öffnung (9) kleiner als der Querschnitt des Kopfes (17) des röhrenförmigen, beweglichen Bauteils (16) ist.

3. Gerät gemäß einem der Ansprüche 1 und 2, **dadurch gekennzeichnet dass** die zylindrische Mündung (11) auf der Höhe des besagten inneren Vorsprungs (14) Kanäle (15) aufweist, die den Innenbereich der zylindrischen Mündung mit dem Außenbereich verbinden.

4. Gerät gemäß einem der vorherigen Ansprüche, **dadurch gekennzeichnet, dass** das besagte röhrenförmige bewegliche Bauteil (16) einen kleineren Innenquerschnitt im Endbereich auf der Seite des Kopfes (17) als im verlängerten Bereich (18) aufweist.

5. Gerät gemäß einem der vorherigen Ansprüche, **dadurch gekennzeichnet, dass** das besagte röhrenförmige bewegliche Bauteil (16) mit Vorrichtungen ausgestattet ist, die seine Drehung um seine Längsachse verhindern.

6. Gerät gemäß dem Anspruch 5, **dadurch gekennzeichnet, dass** die besagten Vorrichtungen eine Längsnut (21) umfassen, die in die seitliche Außenseite des verlängerten Bereichs (18) des röhrenförmigen beweglichen Bauteils (16) eingebracht wurde sowie über einen Schlüsselzapfen (22) der im Endbereich des zylindrischen Mündungsstücks (11) angeordnet ist und in die besagte Längsnut (21) eingreift.

7. Gerät gemäß einem der vorherigen Ansprüche, **dadurch gekennzeichnet, dass** das röhrenförmige bewegliche Bauteil (16) mindestens im Bereich seiner Enden aus einem Material gefertigt ist, deren Härte geringer als die der zu untersuchenden Oberfläche (2) ist.

8. Gerät gemäß einem der vorherigen Ansprüche, **dadurch gekennzeichnet, dass** die optische Achse von mindestens einer der Komponenten des Optikkopplers, somit die Durchgangsöffnung (9), das zylindrische Mündungsstück (11) sowie das röhrenförmige bewegliche Bauteil (16) mit der Achse (20) des besagten Lichtstrahls deckungsgleich sind.

9. Gerät gemäß dem Anspruch 8, **dadurch gekennzeichnet, dass** mindestens eine der besagten Komponenten (9, 11, 16) des Optikkopplers die Drehsymmetrie um die besagte Achse (20) des Lichtstrahls darstellt.
